# EUROPEAN PATENT APPLICATION

(11) **EP 1 292 092 A2**
(43) Date of publication of application: **12.03.2003**
(21) Application number: 02018356.2
(22) Date of filing: 14.08.2002
(51) Int. Cl.: H04M 7/00

(54) **Device and method for data exchange**

(30) Priority: 07.09.2001 DE 10143937
(71) Applicant: SIEMENS AKTIENGESELLSCHAFT, 80333 München (DE)
(72) Inventor: Gronostay, Bernd, 45731 Waltrop (DE); Scholl, Gregor, 58454 Witten (DE); Schroeter, Otto, 45307 Essen (DE)

(57) **Zusammenfassung**

Daten werden zwischen einer Kommunikationsanwendung (2, Media-Applikation) und einer Kommunikationsanlage (1, PBX) über ein IP-Netz (1b) ausgetauscht. Dazu kommuniziert die Kommunikationsanwendung (2, Media-Applikation) über ein anwendungsseitiges Hauptsteuermittel (4, TAPI) mit der Kommunikationsanlage (1, PBX).

Über einen ersten Übertragungsweg werden Basissteuerdaten und die Nutzdaten nach einem ersten Übertragungsstandard (3, H.323) zwischen dem Hauptsteuermittel (4, TAPI) und der Kommunikationsanlage (1, PBX) ausgetauscht,
und über einen zweiten Übertragungsweg nach einem zweiten Übertragungsstandard (5b, Networking Protokoll) werden erweiterte Steuerdaten zwischen einem Hilfssteuermittel (5, MEB) und der Kommunikationsanlage (1, PBX) ausgetauscht.

Bei der Übertragung in Richtung von der Kommunikationsanlage (1, PBX) zur Kommunikationsanwendung (2, Media-Applikation) werden die Basissteuerdaten zunächst vom Hauptsteuermittel (4, TAPI) an das Hilfssteuermittel (5, MEB) übergeben, vom Hilfssteuermittel (5, MEB) mit den erweiterten Steuerdaten zusammengefasst und dann als zusammengefasste Steuerdaten vom Hilfssteuermittel (5, MEB) an das Hauptsteuermittel (4, TAPI) zur Weiterleitung an die Kommunikationsanwendung (2, Media-Applikation) übertragen, und umgekehrt.

## Description

Die Erfindung betrifft eine Vorrichtung und ein Verfahren zum Datenaustausch gemäß den Oberbegriffen der Ansprüche 1 bzw. 9.

Endgeräteanordnungen, die nach dem Telefonie-über-Internet-Protokoll (VoIP = Voice over IP; IP = Internet-Protokoll) arbeiten, sind allgemein bekannt. Dabei werden zwei Kommunikationsgeräte, beispielsweise eine Telekommunikationsanlage und ein Multimedia-Computer (PC), über ein Datennetz miteinander verbunden. Nutzdaten, also beispielsweise Sprach- und Videoinformationen, sowie Steuerdaten werden bei diesem Protokoll in Form von Datenpaketen über das Datennetz übertragen. Die Übertragung geschieht regelmäßig nach einem bekannten Standard, z.B. nach dem H.323-Standard. In dem H.323-Standard ist die Übertragung der Steuerdaten und die parallele Übertragung von verschiedenen Arten von Nutzdaten definiert, die z.B. verschiedenen Video- und Audiostandards genügen.

Kommunikationsendgeräte, die als PC ausgeführt sind, verwenden als Benutzeroberfläche Anwendungsprogramme, die man allgemein als Media-Applikation bezeichnet. Eine solche Media-Applikation übermittelt und empfängt die Nutz- und Steuerdaten über eine normierte Programmierschnittstelle, insbesondere dem Telephony Application Programming Interface (TAPI). Diese Programmierschnittstelle wird von einem sogenannten Hauptsteuermittel zur Verfügung gestellt, das oft auch als TAPI-Treiber bezeichnet wird. Das auf dem PC installierte Hauptsteuermittel tauscht die Nutz- und Steuerdaten auf der einen Seite über das Datennetz mit der Kommunikationsanlage unter Verwendung des H.323-Standards und auf der anderen Seite mit der Media-Applikation über die TAPI-Schnittstelle aus. Sowohl zwischen der Media-Applikation und dem Hauptsteuermittel als auch dem Hauptsteuermittel und der Telekommunikationsanlage sind bei einer Kommunikationsverbindung je zwei logische Datenverbindungen aktiv, nämlich ein Nutzdatenkanal und ein Steuerdatenkanal. Diese beiden Datenkanäle sind im Datennetz zu einem gemeinsamen Kanal (H.323-Kanal) zusammengefasst, werden folglich über diesen gemeinsamen H.323-Kanal von bzw. zu der Telekommunikationsanlage übertragen.

Weiterhin sind CTI-Kommunikationsanwendungen (Computer Telephony Integration) bekannt, die mit dem TAPI-Treiber Kommunikationsendgeräte oder Kommunikationsanlagen steuern. Die Verbindung zwischen der Hauptsteuermittel und der Kommunikationsanlage bzw. dem Kommunikationsendgerät kann das Datennetz oder auch eine serielle oder anderweitige Verbindung sein, die insbesondere nach einem proprietären Übertragungsstandard arbeiten. Die mit diesem Standard übertragbaren Steuerdaten sind meist umfangreicher als die im H.323- Standard definierten Steuerdaten.

Bei den bekannten Endgeräteanordnungen einschließlich der zugehörigen Übertragungsverfahren hat sich als nachteilig erwiesen, dass bei einer nach einem bekannten Übertragungsstandard arbeitenden Kommunikationsverbindung, die weit verbreitet ist und sich bereits ausreichend bewährt hat wie der H.323-Standard, Steuerdaten aus heutiger Sicht nur in eingeschränktem Umfang ausgetauscht werden können, während proprietäre Übertragungsstandards von modernen CTI-Kommunikationsanwendungen einen deutlich erweiterten Umfang bieten.

Aufgabe der Erfindung ist es, den Datenaustausch zwischen einer Telekommunikationsanlage und einer Media-Applikation (Kommunikationsanwendung) zu erweitern, unter Verwendung eines weit verbreiteteten und bewährten und damit sicheren Übertragungsstandards zwischen der Telekommunikationsanlage und einem Hauptsteuermittel (Steuermittel TAPI-Treiber) und unter Verwendung einer normierten Programmierschnittstelle zwischen dem Hauptsteuermittel und der Media-Applikation.

Die Lösung dieser Aufgabe ist bezogen auf die Vorrichtung durch die im Anspruch 1 und bezogen auf das Verfahren durch die im Anspruch 9 angegebenen Merkmale gegeben. Durch die kennzeichnenden Merkmale der Unteransprüche ist die Vorrichtung in vorteilhafter Weise weiter ausgestaltet.

Die Lösung sieht bezogen auf die Vorrichtung und das Verfahren vor, dass ein zweiter Übertragungsweg nach einem zweiten Übertragungsstandard zum Austausch erweiterter Steuerdaten zwischen einem Hilfssteuermittel und der Kommunikationsanlage vorgesehen ist, dass die Basissteuerdaten bei Übertragung von der Kommunikationsanlage zur Kommunikationsanwendung zunächst vom Hauptsteuermittel an das Hilfssteuermittel übergeben, vom Hilfssteuermittel mit den erweiterten Steuerdaten zusammengefasst und dann als zusammengefasste Steuerdaten vom Hilfssteuermittel an das Hauptsteuermittel zur Weiterleitung an die Kommunikationsanwendung übertragen werden, und umgekehrt werden die von der Kommunikationsanwendung zur Kommunikationsanlage zu übertragenden Steuerdaten an das Hauptsteuermittel geleitet, vom Hauptsteuermittel unter Verwendung des zweiten Steuerdatenkanals an das Hilfssteuermittel weitergegeben, vom Hilfssteuermittel in Basissteuerdaten und in erweiterte Steuerdaten zerlegt und die Basissteuerdaten an den ersten Steuerdatenkanal zur Weiterleitung an die Kommunikationsanlage über den ersten Übertragungsweg übertragen, während die Weiterleitung der erweiterten Steuerdaten über den zweiten Übertragungsweg erfolgt. Hierbei können Kommunikationsverbindungen über Datennetze unter Verwendung eines allgemein eingesetzten Standards betrieben werden und dabei auch solche Steuerdaten und Steuerbefehle verwendet werden, die über die in diesem Standard bekannten hinausgehen. Die Kommunikationsanwendung, das Hauptsteuermittel und der Standard zur Übertragung der Basissteuerdaten und der Nutzdaten bleiben dabei unverändert.

Durch die Ausführung des Hauptsteuermittels als TAPI-Treiber ab Version 3.0 können sowohl Steuer- als auch Nutzdaten über eine TAPI-Schnittstelle mit der Kommunikationsanwendung ausgetauscht werden, wobei der Einsatz von einfach zu installierenden Kommunikationsanwendungen auf TAPI-Basis möglich ist.

Die Verwendung eines Internet Protokoll Netzes (IP-Netzes) zur Übertragung aller Daten ist vorteilhaft, weil solche Netze, die nach dem Internet-Protokoll arbeiten, weit verbreitet sind und sich bereits bewährt haben.

Beim Betrieb von VoIP-Anordnungen (Voice over IP = Sprachübertragung mit Hilfe des Internet Protokolls) wird in den meisten Fällen ein bewährter und allgemein anerkannter Übertragungsstandard verwendet. Die mit diesem Standard allein erreichbare Funktionalität zur Steuerung der Kommunikationsverbindung wird mit dem erfindungsgemäßen Verfahren mit geringem Aufwand deutlich erweitert.

Der Standard der International Telecommunication Union (ITU-H.323-Standard) ist weit verbreitet und in vielen Kommunikationsanlagen und Kommunikationsgeräten implementiert, so dass sein Einsatz in der erfindungsgemäßen Vorrichtung die Kommunikation mit fast allen Kommunikationsgeräten gestattet, die diesen Standard verwenden. Der Standard H.323 ist außerdem geeignet, Nutzdaten verschiedener Datenformate zu übertragen.

Zur einfachen Installation und Handhabung ist es vorteilhaft, die Kommunikationsanwendung zusammen mit dem Hauptsteuermittel und dem Hilfssteuermittel gemeinsamen in einem Gerät anzuordnen.

Die weitere Nutzung einer auf der bekannten Schnittstelle des Hauptsteuermittels basierenden Kommunikationsanwendung vereinfacht sich, wenn die zusammengefassten Steuerdaten von einem zweiten Steuerdatenkanal des Hauptsteuermittels verwaltet werden.

Die Verwendung von vorhandenen Kommunikationsanlagen und bestehenden Netzen ist mit wenig Aufwand verbunden, wenn als zweiter Übertragungsstandard ein in diesen Kommunikationsanlagen bereits vorhandenes Protokoll zur Vernetzung von Kommunikationsanlagen verwendet wird und sich das Hilfssteuermittel gegenüber der (den) angeschlossenen Kommunikationsanlage(n) wie eine weitere, über diesen Standard vernetzte Kommunikationsanlage verhält.

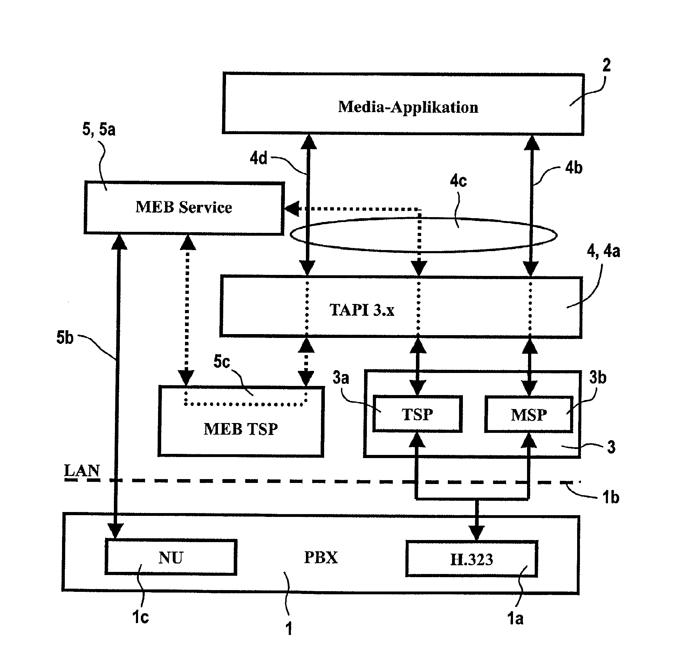

Ein Ausführungsbeispiel einer erfindungsgemäßen Vorrichtung zum Datenaustausch über ein Internet Protokoll Netze als paketvermitteltes Netzwerk (IP-Netz) wird nachfolgend anhand der Zeichnung beschrieben. Die einzige Figur zeigt eine schematische Darstellung der Vorrichtung zum Datenaustausch.

Beim Datenaustausch werden Nutzdaten, beispielsweise Audio- und Videodaten, und Steuerdaten zwischen einer Kommunikationsanlage 1 mit einem zugeordneten Netzwerk-Interface 1a und einer Media-Applikation 2 ausgetauscht. Die Media-Applikation 2 läuft auf einem nicht dargestellten Computer (PC). Die Nutz- und Steuerdaten werden dabei in beide Richtungen übertragen, von der Kommunikationsanlage 1 zur Media-Applikation 2 und umgekehrt, was in der Figur durch die Doppelpfeile dargestellt ist.

Im Folgenden wird zunächst die Datenübertragung von der Kommunikationsanlage 1 in Richtung der Media-Applikation 2 beschrieben:
Die Nutz- und Steuerdaten werden vom Netzwerk-Interface 1a über ein LAN-Datennetz 1b (zum PC) übertragen. Die Übertragung geschieht nach einem bekannten Übertragungsstandard, dem H.323-Standard. Eine Verbindung 3 nach dem Standard H.323 besteht aus zwei logischen Kanälen, einem Steuerdatenkanal 3a für Basissteuerdaten und einem Nutzdatenkanal 3b. Die über die Verbindung 3 übertragenen Daten werden PC-seitig von einem TAPI-Treiber 4a als Hauptsteuermittel 4 weiter verarbeitet, wobei vom TAPI-Treiber 4a (Version 3.0 oder höher) neben den Steuerdaten auch die Nutzdaten behandelt werden können. Der TAPI-Treiber 4a kann mindestens zwei Steuerdatenkanäle 3a, 5c aus unterschiedlichen Verbindungen (3 und Verbindung nach Protokoll 5b) verwalten und diese Steuerdatenkanäle 3a, 5c über die TAPI-Schnittstelle 4c mit verschiedenen Einrichtungen, also beispielsweise der Media-Applikation 2 und einen weiteren Treiber 5a, austauschen.
Die vom Nutzdatenkanal 3b an den TAPI-Treiber 4a übertragenen Nutzdaten werden vom TAPI-Treiber 4a mit Hilfe eines Nutzdatenkanals 4b der normierten Schnittstelle 4c des TAPI-Treibers 4a direkt an die Media-Applikation 2 weitergeleitet.

Analog zur Verbindung nach dem Standard H.323 verfügt auch die TAPI-Schnittstelle 4c über verschiedene logische Kanäle, nämlich Nutzdaten- und Steuerdatenkanäle 4b, 4d.

Die im Steuerdatenkanal 3a der Verbindung 3 übertragenen Basissteuerdaten werden vom TAPI-Treiber 4a über einen Steuerdatenkanal der TAPI-Schnittstelle 4c an einen zusätzlichen Treiber als Hilfssteuermittel 5 übertragen, dem MEB-Treiber 5a (MEB = Media Extension Bridge).

Zum Austausch von zusätzlichen Steuerdaten, den erweiterten Steuerdaten, die im Steuerdatenkanal 3a der Verbindung 3 nicht darstellbar sind, besitzt die Kommunikationsanlage 1 ein weiteres Netzwerk-Interface 1c, das die erweiterten Steuerdaten ebenfalls über das LAN-Datennetz 1b an den MEB-Treiber 5a überträgt. Das Netzwerk-Interface 1c ist eine in der Kommunikationsanlage 1 vorhandene proprietäre Schnittstelle (Vernetzungsschnittstelle). Die Verbindung 5b zwischen dem Interface 1c und dem MEB-Treiber 5a verfährt nach dem zugehörigen proprietären Übertragungsstandard.

Im MEB-Treiber 5a laufen also sowohl die vom Steuerdatenkanal 3a über den TAPI-Treiber 4a übertragenen Basissteuerdaten als auch die über die Verbindung 5b übertragenen erweiterten Steuerdaten zusammen. Der MEB-Treiber 5a stellt dann die Basis- und die erweiterten Steuerdaten gemeinsam über einen zusätzlichen Steuerdatenkanal 5c wiederum dem TAPI-Treiber 4a zur Verfügung. Der TAPI-Treiber 4a ordnet die zusammengefassten Steuerdaten dem Nutzdatenkanal zu und überträgt sie korreliert mit den Nutzdaten über die TAPI-Schnittstelle 4c zur Media-Applikation 2.

Im Folgenden wird die Datenübertragung in umgekehrter Richtung beschrieben:
Im Datenfluss von der Media-Applikation 2 zur Kommunikationsanlage 1 werden die Nutzdaten von der Media-Applikation 2 zunächst über den Nutzdatenkanal 4b der TAPI-Schnittstelle 4c an den TAPI-Treiber 4a übertragen und von diesem dann über den Nutzdatenkanal 3b der Verbindung 3 über das LAN-Datennetz 1b an das Netzwerk-Interface 1a der Kommunikationsanlage 1. Die von der Media-Applikation 2 zur Kommunikationsanlage 1 zu übertragenden "zusammengefassten" Steuerdaten werden von der Media-Applikation 2 über den Steuerdatenkanal der TAPI-Schnittstelle 4d an den TAPI-Treiber 4a übertragen. Vom TAPI-Treiber 4a gelangen diese Steuerdaten über die Verbindung 5c an den MEB-Treiber 5a. Der MEB-Treiber 5a zerlegt diese "zusammengefassten" Steuerdaten in Basissteuerdaten und erweiterte Steuerdaten. Die Basissteuerdaten werden vom MEB-Treiber 5a über den Steuerdatenkanal der TAPI-Schnittstelle 4c an den TAPI-Treiber 4a übertragen und von dort über den Steuerdatenkanal 3a der Verbindung 3 über das LAN-Datennetz 1b an das Netzwerk-Interface 1a der Kommunikationsanlage 1. Die erweiterten Steuerdaten werden vom MEB-Treiber 5a über die Verbindung 5b im LAN-Datennetz 1b an das Interface 1c der Kommunikationsanlage 1 übergeben.

Somit können mit der Media-Applikation 2, die auf einen TAPI-Treiber 4a aufsetzt und über eine bewährte H.323-Verbindung 3 kommuniziert, erweiterte Funktionen genutzt werden, die im H.323-Standard nicht definiert sind. Die Applikation selbst wird dazu nicht geändert.

Im TAPI-Treiber 4a sind nach Einrichtung des MEB-Treibers 5a mindestens zwei Steuerdatenkanäle 3a, 5c (TSP = TAPI Service Provider) verfügbar, einer aus der H.323-Verbindung, auf den der MEB-Treiber 5a zugreift, und ein anderer aus dem MEB-Treiber 5a, auf den die Media-Applikation 2 zugreift.

## Patentansprüche

1. Vorrichtung zum Datenaustausch von Nutzdaten und den Nutzdaten zugeordneten Steuerdaten zwischen einer Kommunikationsanwendung (2) und einer Kommunikationsanlage (1), die über ein paketvermitteltes Netzwerk (1b) verbunden sind,
mit einem anwendungsseitigen Hauptsteuermittel (4), über das die Kommunikationsanwendung (2) mit der Kommunikationsanlage (1) kommuniziert,
mit einem ersten Übertragungsweg, über den Basissteuerdaten und die Nutzdaten nach einem ersten Übertragungsstandard (3) zwischen dem Hauptsteuermittel (4) und der Kommunikationsanlage (1) ausgetauscht werden, wobei das Hauptsteuermittel (4) mindestens einen ersten und einen zweiten Steuerdatenkanal umfasst und die Basissteuerdaten unter Verwendung des ersten Steuerdatenkanals übertragen werden,
**dadurch gekennzeichnet,**
**dass** ein zweiter Übertragungsweg nach einem zweiten Übertragungsstandard (5b) zum Austausch erweiterter Steuerdaten zwischen einem Hilfssteuermittel (5) und der Kommunikationsanlage (1) vorgesehen ist,
**dass** die Basissteuerdaten bei Übertragung von der Kommunikationsanlage (1) zur Kommunikationsanwendung (2) zunächst vom Hauptsteuermittel (4) an das Hilfssteuermittel (5) übergeben, vom Hilfssteuermittel (5) mit den erweiterten Steuerdaten zusammengefasst und dann als zusammengefasste Steuerdaten vom Hilfssteuermittel (5) an den zweiten Steuerdatenkanal des Hauptsteuermittels (4) zur Weiterleitung an die Kommunikationsanwendung (2) übertragen werden, und umgekehrt werden
die von der Kommunikationsanwendung (2) zur Kommunikationsanlage (1) zu übertragenden Steuerdaten an das Hauptsteuermittel (4) geleitet, vom Hauptsteuermittel (4) unter Verwendung des zweiten Steuerdatenkanals an das Hilfssteuermittel (5) weitergegeben, vom Hilfssteuermittel (5) in Basissteuerdaten und in erweiterte Steuerdaten zerlegt und die Basissteuerdaten an den ersten Steuerdatenkanal zur Weiterleitung an die Kommunikationsanlage (1) über den ersten Übertragungsweg übertragen, während die Weiterleitung der erweiterten Steuerdaten über den zweiten Übertragungsweg erfolgt.

2. Vorrichtung nach Anspruch 1,
**dadurch gekennzeichnet,**
**dass** das Hauptsteuermittel (4) ein TAPI-Treiber (4a) ab Version 3.0 ist und die Kommunikationsanwendung (2) eine TAPI-konforme Software ist.

3. Vorrichtung nach Anspruch 1 oder 2,
**dadurch gekennzeichnet,**
**dass** das paketvermittelte Netz (1b) ein IP-Netz (Internet Protokoll) ist.

4. Vorrichtung nach einem der Ansprüche 1 bis 3,
**dadurch gekennzeichnet,**
**dass** die Kommunikationsanlage (1) Bestandteil einer Voice-over-IP-Anordnung (Sprache-über-Internet-Protokoll) ist.

5. Vorrichtung nach einem der Ansprüche 1 bis 4,
**dadurch gekennzeichnet,**
**dass** der erste Übertragungsweg eine Kommunikationsverbindung nach ITU-H.323-Standard ist.

6. Vorrichtung nach einem der Ansprüche 1 bis 5,
**dadurch gekennzeichnet,**
**dass** Hauptsteuermittel (4), Hilfssteuermittel (5) und die Kommunikationsanwendung (2) auf einem gemeinsamen PC installiert sind.

7. Vorrichtung nach einem der Ansprüche 1 bis 6,
**dadurch gekennzeichnet,**
**dass** die zusammengefassten Steuerdaten von einem zweiten Steuerdatenkanal des Hauptsteuermittels (4) übertragen werden.

8. Vorrichtung nach einem der Ansprüche 1 bis 7,
**dadurch gekennzeichnet,**
**dass** der zweite Übertragungsstandard (5b) ein Protokoll zur Vernetzung von Kommunikationsanlagen ist und die Kommunikationsanlage (1) die erweiterten Steuerdaten mit dem Hilfssteuermittel (5) austauscht, das sich gegenüber der Kommunikationsanlage (1) wie eine weitere vernetzte Kommunikationsanlage verhält.

9. Verfahren zum Datenaustausch von Nutzdaten und den Nutzdaten zugeordneten Steuerdaten zwischen einer Kommunikationsanwendung (2) und einer Kommunikationsanlage (1), die über ein paketvermitteltes Netzwerk (1b) verbunden sind,
mit einem anwendungsseitigen Hauptsteuermittel (4), über das die Kommunikationsanwendung (2) mit der Kommunikationsanlage (1) kommuniziert,
mit einem ersten Übertragungsweg, über den Basissteuerdaten und die Nutzdaten nach einem ersten Übertragungsstandard (3) zwischen dem Hauptsteuermittel (4) und der Kommunikationsanlage (1) ausgetauscht werden, wobei das Hauptsteuermittel (4) mindestens einen ersten und einen zweiten Steuerdatenkanal umfasst und die Basissteuerdaten unter Verwendung des ersten Steuerdatenkanals übertragen werden,
**dadurch gekennzeichnet,**
**dass** ein zweiter Übertragungsweg nach einem zweiten Übertragungsstandard (5b) zum Austausch erweiterter Steuerdaten zwischen einem Hilfssteuermittel (5) und der Kommunikationsanlage (1) vorgesehen ist,
**dass** die Basissteuerdaten bei Übertragung von der Kommunikationsanlage (1) zur Kommunikationsanwendung (2) zunächst vom Hauptsteuermittel (4) an das Hilfssteuermittel (5) übergeben, vom Hilfssteuermittel (5) mit den erweiterten Steuerdaten zusammengefasst und dann als zusammengefasste Steuerdaten vom Hilfssteuermittel (5) an den zweiten Steuerdatenkanal des Hauptsteuermittels (4) zur Weiterleitung an die Kommunikationsanwendung (2) übertragen werden, und umgekehrt werden
die von der Kommunikationsanwendung (2) zur Kommunikationsanlage (1) zu übertragenden Steuerdaten an das Hauptsteuermittel (4) geleitet, vom Hauptsteuermittel (4) unter Verwendung des zweiten Steuerdatenkanals an das Hilfssteuermittel (5) weitergegeben, vom Hilfssteuermittel (5) in Basissteuerdaten und in erweiterte Steuerdaten zerlegt und die Basissteuerdaten an den ersten Steuerdatenkanal zur Weiterleitung an die Kommunikationsanlage (1) über den ersten Übertragungsweg übertragen, während die Weiterleitung der erweiterten Steuerdaten über den zweiten Übertragungsweg erfolgt.
